# EUROPÄISCHE PATENTSCHRIFT

(11) **EP 1 697 626 B1**
(45) Veröffentlichungstag und Bekanntmachung des Hinweises auf die Patenterteilung: **29.08.2007**
(21) Anmeldenummer: 04798199.8
(22) Anmeldetag: 12.11.2004
(51) Int. Cl.: F02D 41/30, F02D 41/40

(54) **VERFAHREN ZUM BETRIEB EINES 4-TAKTMOTORS**
METHOD FOR OPERATING A FOUR-CYCLE ENGINE
PROCEDE D'UTILISATION D'UN MOTEUR A 4 TEMPS

(30) Priorität: 19.12.2003 DE 10360004
(43) Veröffentlichungstag der Anmeldung: 06.09.2006
(73) Patentinhaber: ROBERT BOSCH GMBH, 70442 Stuttgart (DE)
(72) Erfinder: WÜRFEL, Gernot, 71665 Vaihingen / Enz (DE)
(74) Vertreter: Körfer, Thomas
(86) Internationale Anmeldenummer: PCT/EP2004/052941
(87) Internationale Veröffentlichungsnummer: WO 2005/061877

(56) Entgegenhaltungen:
- EP-A- 0 905 360
- EP-A- 0 919 714
- EP-A- 1 128 048
- EP-A- 1 363 010
- DE-A- 10 205 494
- DE-A- 19 908 729

## Beschreibung

### Stand der Technik

Die Erfindung geht aus von einem 4-Taktmotor nach der Gattung des Hauptanspruchs.

Beispielsweise geht aus der MTZ Motortechnische Zeitschrift 58 (1997), Seiten 458 - 464 und Seiten 592 - 598, ein 4-Taktmotor hervor, der über zwei Betriebsmodi verfügt. Im Vollastbereich wird der Motor im sog. Homogenbetrieb betrieben, wobei der Brennstoff herkömmlicherweise zwischen 90° und 180° KW des Ansaugtaktes eingespritzt wird. Im Teillastbereich wird der Motor im sog. Schichtladebetrieb betrieben, wobei der Brennstoff herkömmlicherweise zwischen 300° und 360° KW eingespritzt wird. KW steht hier und nachfolgend für Drehwinkelgerade der Kurbelwelle.

Nachteilig bei dem aus der obengenannten Druckschrift bekannten 4-Taktmotor ist insbesondere, daß die Leistung, das Abgasverhalten und der Brennstoffverbrauch nicht hinsichtlich jedem Betriebszustand im laufenden Betrieb optimiert werden kann. Durch die nur sehr eingeschränkten Zeitspannen bzw. Drehwinkelbereiche in denen Brennstoff in den Brennraum eingemessen wird, muß der Brennstoff mit sehr hohem Druck in den Brennraum eingespritzt werden. Hohe Brennstoffdrücke sind nur sehr kostenaufwendig zu realisieren. Außerdem ist die Gemischbildung dabei nur unzureichend, was zu unvollständiger Verbrennung, Ablagerungen, hohem Verbrauch und schlechtem Abgasverhalten führt.

Die EP 0 905 360 A offenbart eine Brennkraftmaschine mit Direkteinspritzung in Viertaktausführung. Um den Verbrennungswirkungsgrad und somit den Kraftstoffverbrauchswirkungsgrad zu verbessern, ohne die Verbrennungsstabilität zu verschlechtern, wird gemäß D1 ein Kraftstoffsteuerungsmittel zur Steuerung einer Kraftstoffeinspritzung vorgesehen, um den Kraftstoff in einem Verdichtungshub mehrfach in den Brennraum einzuspritzen, wenn die Maschine in einem Zustand arbeitet, in dem die Maschinenbelastung oder die Maschinendrehzahl relativ hoch ist, um eine Schichtverbrennung zu erzielen. So wird z. B. in einer Betriebszone, in der sowohl die Maschinenbelastung als auch die Maschinendrehzahl in der Betriebszone mit niedriger Maschinenbelastung und -drehzahl relativ hoch ist, die Kraftstoffeinspritzung geteilt, und die zwei Kraftstoffeinspritzungen werden mit vorbestimmten Verstellungen von der früheren Stufe zur mittleren Stufe (60° bis 80°) im Verdichtungshub und von der mittleren Stufe zur späteren Stufe (30° bis 120°) im Verdichtungshub durchgeführt.

### Vorteile der Erfindung

Das erfindungsgemäße Verfahren zum Betrieb eines 4-Taktmotors mit den kennzeichnenden Merkmalen des Hauptanspruchs hat demgegenüber den Vorteil, daß die Leistung, das Abgasverhalten und der Brennstoffverbrauch, insbesondere durch die verbesserte innere Gemischbildung, verbessert sind. Die Brennstoffdrücke können abgesenkt werden.

Durch die in den Unteransprüchen aufgeführten Maßnahmen sind vorteilhafte Weiterentwicklungen- des im Hauptanspruch angegebenen Verfahrens möglich.

Wird der Brennstoff vollständig innerhalb des dritten Drehwinkelbereichs eingespritzt, sinkt der Brennstoffverbrauch, da sich der Brennstoff über einen längeren Zeitraum mit Luft vermischen kann. Es findet eine besser vorgemischte Verbrennung statt, die vollständiger abläuft.

Von Vorteil ist es außerdem, den gesamten in einem Arbeitsspiel eingespritzten Brennstoff im dritten und im zweiten Drehwinkelbereich einzuspritzen. Dadurch steht für die Zumessung von Brennstoff in den Brennraum mehr Zeit zu Verfügung. Der Brennstoffdruck kann abgesenkt werden. Vorteilhafterweise kann dabei das Verhältnis der dritten Menge zur zweiten Menge im laufenden Betrieb verändert werden. Dies geschieht vorteilhafterweise aufgrund des Klopfverhaltens, wobei bei Auftreten von Klopfen das Verhältnis vergrößert wird. Dadurch ist es möglich, den Motor sehr verbrauchsgünstig zu betreiben und den Brennstoffdruck dabei niedrig zu halten, ohne den Motor durch Klopfen zu schädigen.

Von Vorteil ist es weiterhin, den gesamten in einem Arbeitsspiel eingespritzten Brennstoff im vierten und im zweiten Drehwinkelbereich einzuspritzen. Dadurch steht für die Zumessung von Brennstoff in den Brennraum mehr Zeit zu Verfügung. Der Brennstoffdruck kann abgesenkt werden. Vorteilhafterweise kann dabei das Verhältnis der vierten Menge zur zweiten Menge im laufenden Betrieb verändert werden. Dies geschieht vorteilhafterweise aufgrund des Klopfverhaltens, wobei bei Auftreten von Klopfen das Verhältnis vergrößert wird. Dadurch ist es möglich, den Motor sehr verbrauchsgünstig zu betreiben und den Brennstoffdruck dabei niedrig zu halten, ohne den Motor durch Klopfen zu schädigen.

Vorteilhaft ist es, den gesamten in einem Arbeitsspiel eingespritzten Brennstoff im dritten, vierten und im zweiten Drehwinkelbereich einzuspritzen. Dadurch steht für die Zumessung von Brennstoff in den Brennraum noch mehr Zeit zu Verfügung. Der Brennstoffdruck kann weiter abgesenkt werden. Vorteilhafterweise kann dabei das Verhältnis der dritten Menge zur zweiten Menge und das Verhältnis der vierten Menge zur zweiten Menge im laufenden Betrieb verändert werden. Dies geschieht vorteilhafterweise aufgrund des Klopfverhaltens, wobei bei Auftreten von Klopfen zumindest eines der Verhältnisse vergrößert wird. Dadurch ist es möglich, den Motor sehr verbrauchsgünstig zu betreiben und den Brennstoffdruck dabei niedrig zu halten, ohne den Motor durch Klopfen zu schädigen.

In einer weiteren Weiterbildung des erfindungsgemäßen Verfahrens wird der gesamte in einem Arbeitsspiel eingespritzte Brennstoff im vierten und im dritten Drehwinkelbereich in den Brennraum eingespritzt. Dadurch steht für die Zumessung von Brennstoff in den Brennraum mehr Zeit zu Verfügung. Der Brennstoffdruck kann abgesenkt werden. Vorteilhafterweise kann dabei das Verhältnis der vierten Menge zur dritten Menge im laufenden Betrieb verändert werden. Dadurch ist es möglich, den Motor sehr verbrauchsgünstig zu betreiben und den Brennstoffdruck dabei niedrig zu halten.

Zudem ist es vorteilhaft, den dritten Drehwinkelbereich und/oder den zweiten Drehwinkelbereich so einzuschränken, daß der abgespritzte Brennstoff vollständig in eine Kolbenmulde eingespritzt wird. Dadurch wird eine Benetzung der Zylinderwand mit flüssigem Brennstoff und dadurch eine Löschwirkung (Quenscheffekt) und ein Auswaschen des Schmierfilms auf der Zylinderlauffläche vermieden. Durch die Unterdrückung des Quenscheffekts wird die Bildung unverbrannter Kohlenwasserstoffe vermieden. Durch die vollständige Einspritzung in eine Kolbenmulde während des dritten Drehwinkelbereich und/oder des zweiten Drehwinkelbereichs wird außerdem ein Eintrag von Brennstoff in den Bereich des Feuerstegs verhindert, der dort nur sehr unzureichend an der Durchmischung mit Luft und der anschließenden Verbrennung teilnimmt. Dadurch werden Ablagerungen auf dem Kolbenboden außerhalb der Kolbenmulde und im Bereich des Feuerstegs vermieden, die Kohlenwasserstoffemissionen vermindert und der Brennstoffverbrauch gesenkt. Außerdem wird dadurch eine Ausbildung eines Endgasbereichs im Bereich des Feuerstegs unterdrückt, wodurch eine nach dem Verbrennungsdruckstoß mögliche plötzliche Verbrennung (Klopfen) im Bereich des Feuerstegs verhindert wird.

Ein weiterer Vorteil der Einspritzung in die Kolbenmulde besteht darin, daß eine Konzentration des Brennstoff-LuftGemisches zur Mitte des Brennraums bzw. zur Lage der Zündkerze hin einfacher erreicht werden kann. Dies ist von besonderem Vorteil im Schichtladebetrieb, da dadurch leicht ein sehr zündwilliges Brennstoff-Luft-Gemisch in naher Umgebung der Zündkerze erzeugt werden kann, das nach der Zündung das umgebende sehr magere zündunwillige Gemisch zündet. Außerdem können Wärmeverluste vermieden werden, da die Kolbenmulde eine kleinere Oberfläche aufweist als die Zylinderwand.

Vorteilhafterweise wird der gesamte während eines Arbeitsspiels eingespritzte Brennstoff entweder nur während des dritten Drehwinkelbereiches oder nur während des dritten und zweiten Drehwinkelbereiches oder nur während des vierten und zweiten Drehwinkelbereiches oder nur während des dritten, vierten und zweiten Drehwinkelbereiches oder nur während des dritten und vierten Drehwinkelbereiches eingespritzt, wobei zwischen den genannten Kombinationen der Drehwinkelbereiche im laufenden Betrieb des Motors nach zumindest einem Arbeitsspiel umgeschaltet werden kann. Die Umschaltung erfolgt vorteilhafterweise dabei aufgrund von Motorparametern, insbesondere der Motordrehzahl, des Lastzustandes und/oder der Motortemperatur und/oder des Brennstoffdrucks.

### Zeichnung

Ausführungsbeispiele der Erfindung sind in der Zeichnung vereinfacht dargestellt und in der nachfolgenden Beschreibung näher erläutert. Es zeigen:
- Fig. 1: eine schematische Darstellung der Arbeitsweise eines 4-Taktmotors mit der Zuordnung der verschiedenen Arbeitstakte eines Arbeitsspiels zu den Drehwinkeln der Kurbelwelle bzw. der Kurbelwellenwinkeln,
- Fig. 2: ein Diagramm zur Darstellung eines ersten erfindungsgemäßen Ausführungsbeispiels des Betriebs eines 4-Taktverbrennungsmotors,
- Fig. 3: ein Diagramm zur Darstellung eines zweiten erfindungsgemäßen Ausführungsbeispiels des Betriebs eines 4-Taktverbrennungsmotors,
- Fig. 4: ein Diagramm zur Darstellung eines dritten erfindungsgemäßen Ausführungsbeispiels des Betriebs eines 4-Taktverbrennungsmotors,
- Fig. 5: ein Diagramm zur Darstellung eines vierten erfindungsgemäßen Ausführungsbeispiels des Betriebs eines 4-Taktverbrennungsmotors und
- Fig. 6: ein Diagramm zur Darstellung eines fünften erfindungsgemäßen Ausführungsbeispiels des Betriebs eines 4-Taktverbrennungsmotors.

### Beschreibung der Ausführungsbeispiele

Nachfolgend werden Ausführungsbeispiele der Erfindung beispielhaft beschrieben. Übereinstimmende Bauteile und Merkmale sind dabei mit übereinstimmenden Bezugszeichen versehen.

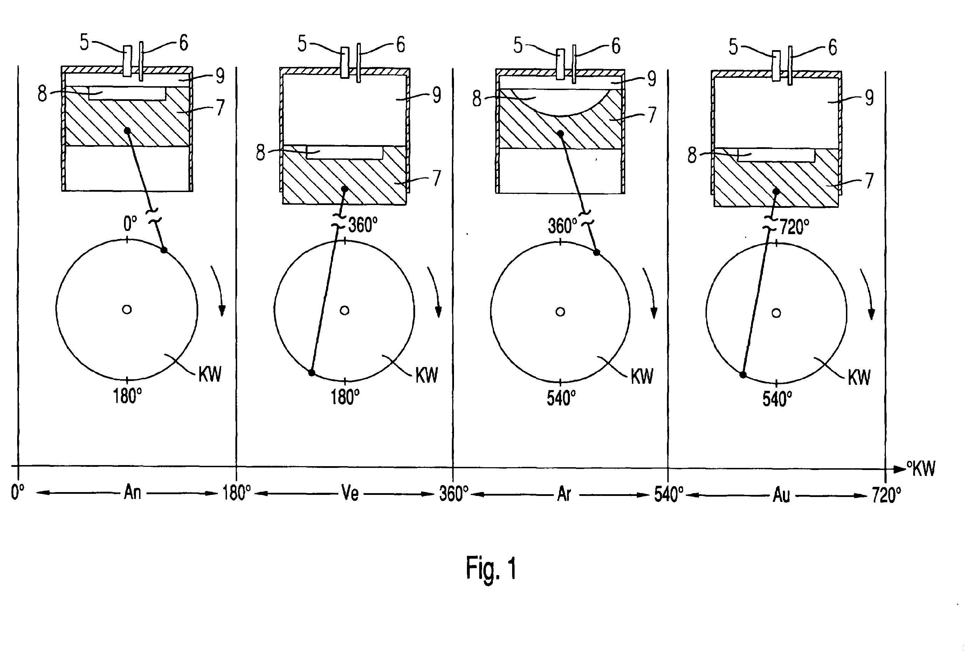

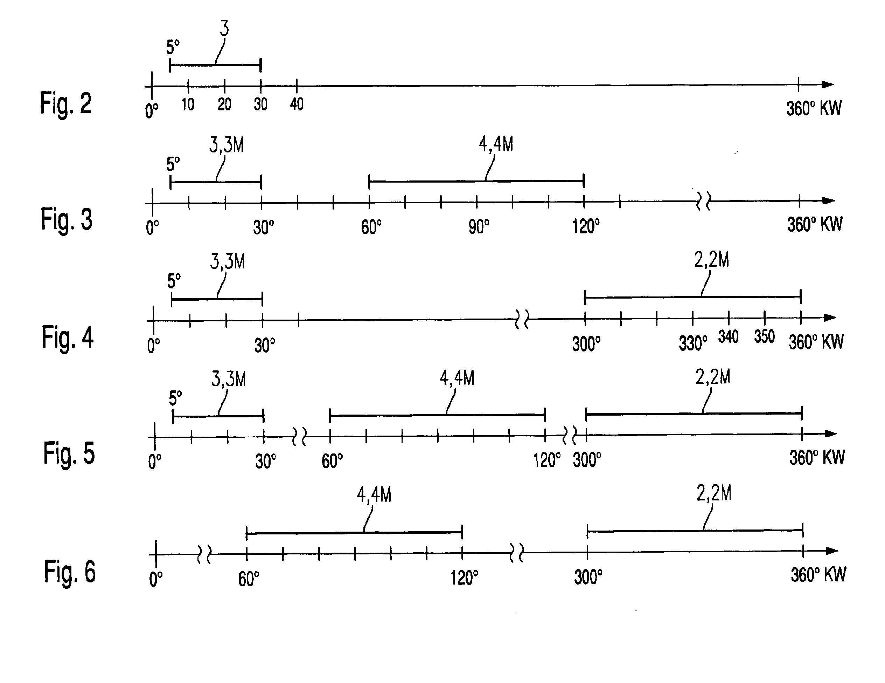

Bevor anhand der Figuren 2 bis 6 bevorzugte erfindungsgemäße Ausführungsbeispiele näher beschrieben werden, soll zum besseren Verständnis der Erfindung zunächst anhand von Fig. 1 die Arbeitsweise eines 4-Taktmotors mit der Zuordnung der verschiedenen Arbeitstakte eines Arbeitsspiels zu den Drehwinkeln ° KW der Kurbelwelle KW grob erklärt werden.

Fig. 1 zeigt ein Diagramm in der die Arbeitsweise eines 4-Taktmotors erklärt wird. Der im Beispiel fremdgezündete, in einen Brennraum 9 direkt einspritzende und über einen Kolben 7 mit Kolbenmulde 8 verfügenden 4-Taktmotor weist vier Arbeitstakte, Ansaugtakt An, Verdichtungstakt Ve, Arbeitstakt Ar und Ausschiebetakt Au, auf. Der Rauminhalt der Kolbenmulde 8 ist Bestandteil des Brennraums 9. Der Ansaugtakt An ist dem Drehwinkelbereich der Kurbelwelle zwischen 0° und 180° KW zugeordnet, der Verdichtungstakt Ve findet im Drehwinkelbereich zwischen 180° und 360° statt, der Arbeitstakt Ar findet zwischen 360° und 540° KW statt und der Ausschiebetakt Au findet zwischen 540° und 720° KW statt. Die Abläufe in den einzelnen Arbeitstakten An, Ve, Ar, Au sind dem Fachmann hinreichend bekannt und sollen hier nicht näher dargelegt werden. Die Zündung des Brennstoff-Luft-Gemisches erfolgt idealerweise über eine Zündkerze 6, welche beispielsweise relativ nahe an einem Brennstoffeinspritzventil 5 in den Brennraum 9 ragt.

Herkömmlicherweise wird bei direkteinspritzenden 4-Taktmotoren mit Fremdzündung der Brennstoff während eines ersten Drehwinkelbereichs 1, welcher zwischen 90° und 180° KW liegt, oder während eines zweiten Drehwinkelbereichs 2, welcher zwischen 300° und 360° KW liegt, in den Brennraum 9 eingespritzt.

Bekanntermaßen wird im herkömmlich betriebenen direkteinspritzenden 4-Taktmotor nur während der zwei genannten Drehwinkelbereiche 1, 2 in den Brennraum 9 Brennstoff eingespritzt. Im Bereich der Vollast wird beim direkteinspritzenden 4-Taktmotor der Brennstoff ausschließlich während des ersten Drehwinkelbereichs 1 in den Brennraum 9 eingespritzt. Im Teillastbereich wird der Brennstoff ausschließlich während des zweiten Drehwinkelbereichs 2 in den Brennraum 9 eingespritzt. Dies ist dem Fachmann bekannt und soll hier nicht weiter dargelegt werden.

Erfindungsgemäß kann Brennstoff während zwei weiterer Drehwinkelbereiche, einem dritten Drehwinkelbereich 3, der zwischen 0° und 50° KW liegt, und/oder einem vierten Drehwinkelbereich 4, der zwischen 60° und 120° KW liegt, in den Brennraum 9 zugemessen bzw. eingespritzt werden.

Fig. 2 zeigt ein Diagramm zur Darstellung eines ersten erfindungsgemäßen Ausführungsbeispiels des Betriebs eines 4-Taktverbrennungsmotors, in dem der gesamte für ein Arbeitsspiel eingespritzte Brennstoff während zumindest einem Teil des dritten Drehwinkelbereichs 3 in den Brennraum 9 eingespritzt wird. Die Einspritzung des Brennstoffs erfolgt über das Brennstoffeinspritzventil 5, welches beispielsweise nach innen öffnet. Es können auch Brennstoffeinspritzventile 5 verwendet werden, die nach außen öffnen und einen Kegelöffnungswinkel von mindestens 60° aufweisen. Der Brennstoff wird dabei vorteilhafterweise vollständig in die stark ausgeprägte Kolbenmulde 8 mit beispielsweise mindestens 15 mm Tiefe, eingespritzt. Der Quetschanteil beträgt dabei beispielsweise ca. 70%. Vorteilhafterweise ist die dabei erzeugte Quetschströmung zentral zur Mitte des Brennraums 9 gerichtet, so daß die Zündkerze 6 und das abspritzseitige Ende des Brennstoffeinspritzventils 5 intensiv belüftet werden. Die Quetschströmung fördert die Entflammungsgeschwindigkeit und somit den Gemischdurchbrand unabhängig von Last und Drehzahl. Weiterhin wird die Bildung von Verbrennungsablagerungen am Brennstoffeinspritzventil 5 vermindert. Um bei hohen Drehzahlen und großem Brennstoffbedarf, beispielsweise bei Höchstleitung, die erforderliche Brennstoffmenge innerhalb des dritten Drehwinkelbereichs 3 vollständig in die Kolbenmulde 8 einspritzen zu können, kann beispielsweise durch einen erhöhten Brennstoffdruck, beispielsweise 200 bar, die Durchflußmenge des abgespritzten Brennstoffs pro Zeiteinheit erhöht werden.

Ein Betrieb gemäß dem ersten erfindungsgemäßen Ausführungsbeispiels kommt vorteilhafterweise bei 4-Taktmotoren zum Einsatz, bei denen ein Verdichtungsverhältnis von 12 nicht überschritten wird.

Fig. 3 zeigt ein Diagramm zur Darstellung eines zweiten erfindungsgemäßen Ausführungsbeispiels des Betriebs eines 4-Taktverbrennungsmotors, in welchem der gesamte in einem Arbeitsspiel eingespritzte Brennstoff während zumindest einem Teil des dritten Drehwinkelbereichs 3 und wahrend zumindest einem Teil des vierten Drehwinkelbereichs 4 in den Brennraum 9 eingespritzt wird, wobei im dritten Drehwinkelbereich 3 eine dritte Menge 3M Brennstoff und im vierten Drehwinkelbereich 4 eine vierte Menge 4M Brennstoff in den Brennraum 9 eingespritzt wird. Die gesamte in einem Arbeitsspiel eingespritzte Brennstoffmenge kann dabei in unterschiedlichem Maße auf die beiden Mengen 3M, 4M aufgeteilt werden. Vorteilhafterweise kann der dritte Drehwinkelbereich 3 so eingeschränkt werden und/oder der Brennstoffdruck so erhöht werden, daß die erforderliche dritte Menge 3M Brennstoff vollständig in die Kolbenmulde 8 eingespritzt wird.

Fig. 4 zeigt ein Diagramm zur Darstellung eines dritten erfindungsgemäßen Ausführungsbeispiels des Betriebs eines 4-Taktverbrennungsmotors, in welchem der gesamte in einem Arbeitsspiel eingespritzte Brennstoff während zumindest einem Teil des dritten Drehwinkelbereichs 3 und während zumindest einem Teil des zweiten Drehwinkelbereichs 2 in den Brennraum 9 eingespritzt wird, wobei im dritten Drehwinkelbereich 3 die dritte Menge 3M Brennstoff und im zweiten Drehwinkelbereich 2 eine zweite Menge 2M Brennstoff in den Brennraum 9 eingespritzt wird. Die gesamte während eines Arbeitsspiels eingespritzte Brennstoffmenge kann dabei in unterschiedlichem Maße auf die beiden Mengen 3M, 2M aufgeteilt werden.

Die Aufteilung der gesamten in einem Arbeitsspiel eingespritzten Brennstoffmenge auf die beiden Mengen 3M und 2M kann im laufenden Betrieb des 4-Taktverbrennungsmotors jeweils nach zumindest einem Arbeitsspiel verändert werden, wobei die Aufteilung der Gesamtmenge auf die beiden Mengen 3M und 2M durch das Klopfverhalten des 4-Taktmotors bestimmt wird. Beispielsweise wird bei Auftreten von Klopfen die dritte Menge 3M schrittweise verringert und die zweite Menge 2M schrittweise erhöht bis die Klopferscheinungen nicht mehr durch einen Klopfsensor gemessen werden können. Beispielsweise ist bei klopffreier Verbrennung eine schrittweise Erhöhung der zweiten Menge 2M möglich bis Klopferscheinungen auftreten, worauf dann die zweite Menge 2M wieder schrittweise verringert wird. Die dritte Menge 3M wird dabei entsprechend angepaßt, so daß die für ein Arbeitsspiel notwendig Gesamtmenge an Brennstoff innerhalb eines Arbeitsspiels nicht verändert wird.

Vorteilhafterweise kann der dritte Drehwinkelbereich 3 und/oder der zweite Drehwinkelbereich 2 so eingeschränkt werden und/oder der Brennstoffdruck so erhöht werden, daß die erforderliche dritte Menge 3M und die erforderliche zweite Menge 2M Brennstoff vollständig in die Kolbenmulde 8 eingespritzt wird.

Fig. 5 zeigt ein Diagramm zur Darstellung eines vierten erfindungsgemäßen Ausführungsbeispiels des Betriebs eines 4-Taktverbrennungsmotors, in welchem der gesamte in einem Arbeitsspiel eingespritzte Brennstoff während zumindest einem Teil des dritten Drehwinkelbereichs 3 und während zumindest einem Teil des zweiten. Drehwinkelbereichs 2 und während zumindest einem Teil des vierten Drehwinkelbereichs 4 in den Brennraum 9 eingespritzt wird, wobei im dritten Drehwinkelbereich 3 die dritte Menge 3M Brennstoff und im zweiten Drehwinkelbereich 2 die zweite Menge 2M und im vierten Drehwinkelbereich 4 eine vierte Menge 4M Brennstoff in den Brennraum 9 eingespritzt wird. Die gesamte in einem Arbeitsspiel eingespritzte Menge an Brennstoff kann dabei in unterschiedlichem Maße auf die beiden Mengen 3M, 2M und 4M aufgeteilt werden. Die Aufteilung der gesamten in einem Arbeitsspiel eingespritzten Brennstoffmenge auf die Mengen 3M, 2M und 4M kann im laufenden Betrieb des 4-Taktverbrennungsmotors jeweils nach zumindest einem Arbeitsspiel verändert werden, wobei eine Aufteilung der Gesamtmenge auf die Mengen 3M, 2M und 4M durch das Klopfverhalten und die Schadstoffemission des 4-Taktmotors bestimmt wird.

Im Ausführungsbeispiel wird bei Auftreten von Klopfen die dritte Menge 3M schrittweise verringert und die zweite Menge 2M schrittweise erhöht und/oder die vierte Menge 4M schrittweise verringert und die zweite Menge 2M schrittweise erhöht, bis die Klopferscheinungen nicht mehr durch einen Klopfsensor gemessen werden können. Beispielsweise ist bei klopffreier Verbrennung eine schrittweise Erhöhung der zweiten Menge 3M möglich, bis Klopferscheinungen auftreten, worauf dann die zweite Menge 2M wieder schrittweise erhöht wird. Die einzelnen Untermengen werden korrespondierend angepaßt, so daß die für ein Arbeitsspiel notwendige bzw. ermittelte Gesamtmenge an Brennstoff innerhalb eines Arbeitsspiels nicht verändert wird.

Vorteilhafterweise kann der dritte Drehwinkelbereich 3 und/oder der zweite Drehwinkelbereich 2 so eingeschränkt werden und/oder der Brennstoffdruck so erhöht werden, daß die erforderliche dritte Menge 3M und die erforderliche zweite Menge 2M Brennstoff vollständig in die Kolbenmulde 8 eingespritzt wird.

Fig. 6 zeigt ein Diagramm zur Darstellung eines fünften erfindungsgemäßen Ausführungsbeispiels des Betriebs eines 4-Taktverbrennungsmotors, in welchem der gesamte in einem Arbeitsspiel eingespritzte Brennstoff während zumindest einem Teil des vierten Drehwinkelbereichs 4 und während zumindest einem Teil des zweiten Drehwinkelbereichs 2 in den Brennraum 9 eingespritzt wird, wobei im vierten Drehwinkelbereich 4 die vierte Menge 4M Brennstoff und im zweiten Drehwinkelbereich 2 eine zweite Menge 2M Brennstoff in den Brennraum 9 eingespritzt wird.

Die gesamte während eines Arbeitsspiels eingespritzte Brennstoffmenge kann dabei in unterschiedlichem Maße auf die beiden Mengen 4M, 2M aufgeteilt werden. Die Aufteilung der gesamten in einem Arbeitsspiel eingespritzten Brennstoffmenge auf die beiden Mengen 4M und 2M kann im laufenden Betrieb des 4-Taktverbrennungsmotors jeweils nach zumindest einem Arbeitsspiel verändert werden, wobei die Aufteilung der Gesamtmenge auf die beiden Mengen 4M und 2M durch das Klopfverhalten des 4-Taktmotors bestimmt wird. Beispielsweise wird bei Auftreten von Klopfen die vierte Menge 4M schrittweise verringert und die zweite Menge 2M schrittweise erhöht bis die Klopferscheinungen nicht mehr durch einen Klopfsensor gemessen werden können. Beispielsweise ist bei klopffreier Verbrennung eine schrittweise Erhöhung der zweiten Menge 4M möglich, bis Klopferscheinungen auftreten, worauf dann die zweite Menge 2M wieder schrittweise erhöht wird. Die vierte Menge 4M wird dabei entsprechend angepaßt, so daß die für ein Arbeitsspiel notwendig Gesamtmenge an Brennstoff innerhalb eines Arbeitsspiels nicht verändert wird.

Vorteilhafterweise ist der zweite Drehwinkelbereich 2 so eingeschränkt und/oder der Brennstoffdruck so erhöht, daß die erforderliche zweite Menge 2M Brennstoff vollständig in die Kolbenmulde 8 eingespritzt wird.

Gemäß des erfindungsgemäßen Verfahrens ist es möglich, zwischen den in den ausgeführten Ausführungsbeispielen der Figuren 2 bis 6 beschriebenen erfindungsgemäßen Betriebsverfahren im laufenden Betrieb des 4-Taktverbrennungsmotors umzuschalten bzw. zu wechseln. Dies geschieht vorteilhaft aufgrund von einem oder mehreren Motorparametern, wie z.B. der Motordrehzahl, dem Lastzustand, dem Brennstoffdruck und/oder der Motortemperatur und/oder der Schadstoffemissionen.

Die Erfindung ist nicht auf die dargestellten Ausführungsbeispiele beschrankt. Die Merkmale der Ausführungsbeispiele können in beliebiger Weise miteinander kombiniert werden.

## Patentansprüche

1. Verfahren zum Betrieb eines 4-Takt-Hubkolben-Verbrennungsmotors mit innerer Verbrennung, Fremdzündung und Brennstoff-Direkteinspritzung in zumindest einen durch einen Kolben (7) begrenzten Brennraum (9), wobei der Kolben (7) eine Kurbelwelle (KW) antreibt, wobei ein Ansaugtakt (An) in einem Drehwinkelbereich der Kurbelwelle (KW) zwischen 0° und 180° KW, ein Verdichtungstakt (Ve) in einem Drehwinkelbereich zwischen 180° und 360° KW, ein Arbeitstakt (Ar) in einem Drehwinkelbereich zwischen 360° und 540° KW und ein Ausschiebetakt (Au) zwischen 540° und 720° KW stattfindet,
**dadurch gekennzeichnet,**
**dass** der gesamte für ein Arbeitsspiel eingespritzte Brennstoff während zumindest einem Teil eines dritten Drehwinkelbereichs (3) der Kurbelwelle (KW), welcher zwischen 0° und 50° liegt, und während zumindest einem Teil eines zweiten Drehwinkelbereichs (2), welcher zwischen 300 ° und 360° liegt, und während zumindest einem Teil eines vierten Drehwinkelbereichs (4), welcher zwischen 60° und 120° liegt, eingespritzt wird, wobei im dritten Drehwinkelbereich (3) eine dritte Menge (3M) Brennstoff, im zweiten Drehwinkelbereich (2) eine zweite Menge Brennstoff (2M) und im vierten Drehwinkelbereich (4) eine vierte Menge (4M) Brennstoff in den Brennraum (9) eingespritzt wird.

2. Verfahren nach Anspruch 1,
**dadurch gekennzeichnet,**
**dass** maximal ein Verdichtungsverhältnis von 12 erreicht wird.

3. Verfahren nach Anspruch 1 oder 2,
**dadurch gekennzeichnet,**
**dass** das Verhältnis der dritten Menge (3M) zur zweiten Menge (2M) im laufenden Betrieb des 4-Takt-Verbrennungsmotors verändert werden kann.

4. Verfahren nach Anspruch 3,
**dadurch gekennzeichnet,**
**dass** das Verhältnis der dritten Menge (3M) zur zweiten Menge (2M) bei Auftreten von Klopfen schrittweise verringert wird.

5. Verfahren nach Anspruch 1,
**dadurch gekennzeichnet,**
**dass** das Verhältnis der vierten Menge (4M) zur zweiten Menge (2M) im laufenden Betrieb des 4-Takt-Verbrennungsmotors verändert werden kann.

6. Verfahren nach Anspruch 5,
**dadurch gekennzeichnet,**
**dass** das Verhältnis der vierten Menge (4M) zur zweiten Menge (2M) bei Auftreten von Klopfen schrittweise verringert wird.

7. Verfahren nach Anspruch 1,
**dadurch gekennzeichnet,**
**dass** das Verhältnis der dritten Menge (3M) und vierten Menge (4M) zur zweiten Menge (2M) im laufenden Betrieb des 4-TaktVerbrennungsmotors verändert werden kann.

8. Verfahren nach Anspruch 7,
**dadurch gekennzeichnet,**
**dass** das Verhältnis der dritten Menge (3M) zur zweiten Menge (2M) bei Auftreten von Klopfen schrittweise verringert wird und/oder das Verhältnis der vierten Menge (4M) zur zweiten Menge (2M) bei Auftreten von Klopfen schrittweise verringert wird.

9. Verfahren nach Anspruch 1,
**dadurch gekennzeichnet,**
**dass** das Verhältnis der vierten Menge (4M) zur dritten Menge (3M) im laufenden Betrieb des 4-Takt-Verbrennungsmotors verändert werden kann.

10. Verfahren nach einem der vorangegangenen Ansprüche,
**dadurch gekennzeichnet,**
**dass** der dritte Drehwinkelbereich (3) und/oder der zweite Drehwinkelbereich (2) so eingeschränkt werden, dass der abgespritzte Brennstoff vollständig in eine Kolbenmulde (8) eingespritzt wird.

11. Verfahren nach den Ansprüchen 1 bis 10,
**dadurch gekennzeichnet,**
**dass** im laufenden Betrieb des 4-Takt-Verbrennungsmotors zwischen einer Einspritzung des gesamten während eines Arbeitsspiels eingespritzten Brennstoffs im dritten, vierten und zweiten Drehwinkelbereich (3,4, 2) nach zumindest einem Arbeitsspiel umgeschaltet werden kann.

12. Verfahren nach Anspruch 11,
**dadurch gekennzeichnet,**
**dass** die Umschaltung aufgrund von Motorparametern, insbesondere der Motordrehzahl und/oder des Lastzustandes und/oder der Motortemperatur und/oder des Brennstoffdrucks und/oder des Verhältnisses von Russ-/Kohlenwasserstoff-Anteil im Abgas erfolgt.

## Claims

1. Method for operating a 4-stroke reciprocating-piston internal combustion engine having internal combustion, spark ignition and direct fuel injection into at least one combustion chamber (9) which is delimited by a piston (7), with the piston (7) driving a crankshaft (CA), and with an intake stroke (An) taking place in a rotational angle range of the crankshaft (CA) between 0° and 180° CA, a compression stroke (Ve) taking place in a rotational angle range between 180 ° and 360 ° CA, a working stroke (Ar) taking place in a rotational angle range between 360° and 540° CA, and an exhaust stroke (Au) taking place between 540° and 720° CA,
**characterized**
**in that** the entire amount of fuel injected for one working cycle is injected during at least a part of a third rotational angle range (3) of the crankshaft (CA) which is situated between 0° and 50°, and during at least a part of a second rotational angle range (2) which is situated between 300° and 360°, and during at least a part of a fourth rotational angle range (4) which is situated between 60° and 120°, with a third quantity (3M) of fuel being injected into the combustion chamber (9) in the third rotational angle range (3), a second quantity of fuel (2M) being injected into the combustion chamber (9) in the second rotational angle range (2), and a fourth quantity (4M) of fuel being injected into the combustion chamber (9) in the fourth rotational angle range (4).

2. Method according to Claim 1,
**characterized**
**in that** a maximum compression ratio of 12 is reached.

3. Method according to Claim 1 or 2,
**characterized**
**in that** the ratio of third quantity (3M) to second quantity (2M) can be varied during ongoing operation of the 4-stroke internal combustion engine.

4. Method according to Claim 3,
**characterized**
**in that** the ratio of third quantity (3M) to second quantity (2M) is reduced in a stepped fashion in the event of knocking occurring.

5. Method according to Claim 1,
**characterized**
**in that** the ratio of fourth quantity (4M) to second quantity (2M) can be varied during ongoing operation of the 4-stroke internal combustion engine.

6. Method according to Claim 5,
**characterized**
**in that** the ratio of fourth quantity (4M) to second quantity (2M) is reduced in a stepped fashion in the event of knocking occurring.

7. Method according to Claim 1,
**characterized**
**in that** the ratio of third quantity (3M) and fourth quantity (4M) to second quantity (2M) can be varied during ongoing operation of the 4-stroke internal combustion engine.

8. Method according to Claim 7,
**characterized**
**in that** the ratio of third quantity (3M) to second quantity (2M) is reduced in a stepped fashion in the event of knocking occurring and/or the ratio of fourth quantity (4M) to second quantity (2M) is reduced in a stepped fashion in the event of knocking occurring.

9. Method according to Claim 1,
**characterized**
**in that** the ratio of fourth quantity (4M) to third quantity (3M) can be varied during ongoing operation of the 4-stroke internal combustion engine.

10. Method according to one of the preceding claims,
**characterized**
**in that** the third rotational angle range (3) and/or the second rotational angle range (2) are restricted such that the ejected fuel is injected entirely into a piston depression (8).

11. Method according to one of Claims 1 to 10,
**characterized**
**in that** in ongoing operation of the 4-stroke internal combustion engine, a switch can be made, after at least one working cycle, between an injection of the entire amount of fuel injected during one working cycle in the third, fourth and second rotational angle range (3, 4, 2).

12. Method according to Claim 11,
**characterized**
**in that** the switch takes place on the basis of engine parameters, in particular the engine speed and/or the load state and/or the engine temperature and/or the fuel pressure and/or the ratio of a soot/hydrocarbon proportion in the exhaust gas.

## Revendications

1. Procédé de gestion d'un moteur à combustion interne à piston linéaire et quatre temps, à allumage commandé et injection directe de carburant dans au moins une chambre de combustion (9) délimitée par un piston (7),
le piston (7) entraînant un vilebrequin (KW) et le temps d'admission (An) se situe dans une plage angulaire du vilebrequin (KW) comprise entre 0° et 180° KW, le temps de compression (Ve) se situe dans une plage d'angle de rotation comprise entre 180° et 360° KW, le temps de travail (Ar) se situe dans une plage d'angle de rotation comprise entre 360° et 540°KW et le temps d'expulsion (Au) se produit entre 540° et 720° KW,
**caractérisé en ce que**
l'ensemble du carburant injecté pendant un cycle de fonctionnement est injecté pendant au moins une partie d'une troisième plage d'angle de rotation (3) du vilebrequin (KW) située entre 0° et 50° et pendant au moins une partie d'une seconde plage d'angle de rotation (2) située entre 300° et 360° et pendant au moins une partie d'une quatrième plage d'angle de rotation (4) comprise entre 60° et 120°, et on injecte dans la troisième plage d'angle de rotation (3) une troisième quantité (3M) de carburant, dans la seconde plage d'angle de rotation (2) une seconde quantité de carburant (2M), et dans une quatrième plage d'angle de rotation (4) on injecte une quatrième quantité de carburant (4M) dans la chambre de combustion (9).

2. Procédé selon la revendication 1,
**caractérisé en ce qu'**
on atteint au maximum un rapport de compression égal à 12.

3. Procédé selon la revendication 1 ou 2,
**caractérisé en ce que**
le rapport entre la troisième quantité (3M) et la seconde quantité (2M) est modifié au cours du fonctionnement du moteur à combustion à 4 temps.

4. Procédé selon la revendication 3,
**caractérisé en ce qu'**
on diminue le rapport de la troisième quantité (3M) à la seconde quantité (2M) pas à pas lorsque se produit du cliquetis.

5. Procédé selon la revendication 1,
**caractérisé en ce qu'**
on peut modifier le rapport de la quatrième quantité (4M) à la seconde quantité (2M) pendant le fonctionnement du moteur à combustion à 4 temps.

6. Procédé selon la revendication 5,
**caractérisé en ce qu'**
on diminue pas à pas le rapport entre la quatrième quantité (4M) et la seconde quantité (2M) lorsque du cliquetis se produit.

7. Procédé selon la revendication 1,
**caractérisé en ce qu'**
on peut modifier le rapport de la troisième quantité (3M) et de la quatrième quantité (4M) par rapport à la seconde quantité (2M) en fonctionnement courant du moteur à combustion interne à 4 temps.

8. Procédé selon la revendication 7,
**caractérisé en ce qu'**
on diminue pas à pas le rapport de la troisième quantité (3M) à la seconde quantité (2M) lorsque se produit du cliquetis et/ou on diminue pas à pas le rapport de la quatrième quantité (4M) à la seconde quantité (2M) lorsque se produit du cliquetis.

9. Procédé selon la revendication 1,
**caractérisé en ce qu'**
on modifie le rapport de la quatrième quantité (4M) à la troisième quantité (3M) pendant le fonctionnement du moteur à combustion interne à 4 temps.

10. Procédé selon l'une des revendications précédentes,
**caractérisé en ce qu'**
on limite la troisième plage d'angle de rotation (3) et/ou la seconde plage d'angle de rotation (2) pour que le carburant éjecté soit injecté complètement dans une auge de pistons (8).

11. Procédé selon l'une des revendications 1 à 10,
**caractérisé en ce que**
pendant le fonctionnement courant du moteur à combustion interne à 4 temps, on commute entre une injection de l'ensemble du carburant injecté pendant un cycle de travail dans la troisième, la quatrième et la seconde plage d'angle de rotation (3, 4, 2), après au moins un cycle de travail.

12. Procédé selon la revendication 11,
**caractérisé en ce qu'**
on commute en fonction de paramètres de fonctionnement du moteur, notamment de la vitesse de rotation du moteur et/ou de l'état de charge et/ou de la température du moteur et/ou de la pression de carburant et/ou du rapport entre la teneur en suie/hydrocarbures dans les gaz d'échappement.
